# EUROPEAN PATENT APPLICATION

(11) **EP 4 803 372 A1**
(43) Date of publication of application: **09.09.2026**
(21) Application number: 25172707.9
(22) Date of filing: 25.04.2025
(51) Int. Cl.: B60Q 1/50

(54) **EXTERNAL HUMAN-MACHINE INTERFACE (EHMI) AND INFORMATION SHARING SYSTEM FOR AUTONOMOUS VEHICLES**

(30) Priority: 04.03.2025 TR 2025002600
(71) Applicant: Adastec Teknoloji Anonim Sirketi, 34776 Istanbul (TR)
(72) Inventor: DUMAN, MURAT EMRE, 34776 stanbul (TR)

(57) **Abstract**

The invention relates to an external human-machine interface (EHMI) and information sharing system for autonomous vehicles, which enables to increase traffic safety by transferring the operating mode, environmental information and movement planning of autonomous buses to other road users through LED panels.

## Description

### Technical field

The invention relates to an external human-machine interface (EHMI) and information sharing system for autonomous vehicles, which enables to increase traffic safety by transferring the operating mode, environmental information and movement planning of autonomous buses to other road users through LED panels.

### State of the Art

The vehicle's interaction with its surroundings is limited in existing autonomous bus systems. There is not enough information provided for pedestrians and other traffic components.

Again, in traditional methods, there is only an interaction based on stop lights and traffic rules. This can lead to uncertainty in the traffic environment and jeopardize safety.

### The Purpose of the Invention

The invention is an external human-machine interface (EHMI) system designed for safer integration of autonomous buses in the traffic environment. No information was provided to the environment in the autonomous bus' relationship with the environment prior to the invention, while the vehicle is able to perceive the environment in a high-level manner with the existing sensor fusion and perform motion planning to cover all situations.

Through displays to be mounted on the buses, vulnerable road users will be able to receive important information on whether the bus is operated autonomously or under manual control. This will reduce uncertainty for vulnerable road users and enable safer and more predictable interactions in mixed traffic environments. The system's ability to provide such vital information will work in line with the goal of integrating autonomous vehicles into city traffic while prioritizing safety.

The invention will also contribute to the movement of the vehicle and its interaction with the environment in the event that the driver is completely removed in autonomous driving. Under normal circumstances, pedestrians or other traffic components will be able to follow the interactions that they expect from the safety driver due to legal restrictions from the led panels in the invention and act accordingly.

The invention aims to increase traffic safety by increasing the interaction of autonomous buses with the environment.

The invention aims to create a more predictable and safer traffic environment for vulnerable road users such as pedestrians and cyclists.

The invention aims to increase awareness by facilitating the adaptation of autonomous driving to society.

The invention aims to prevent accidents by providing additional visual information in situations where conventional stop lights and traffic signs are insufficient.

### Description of Figures

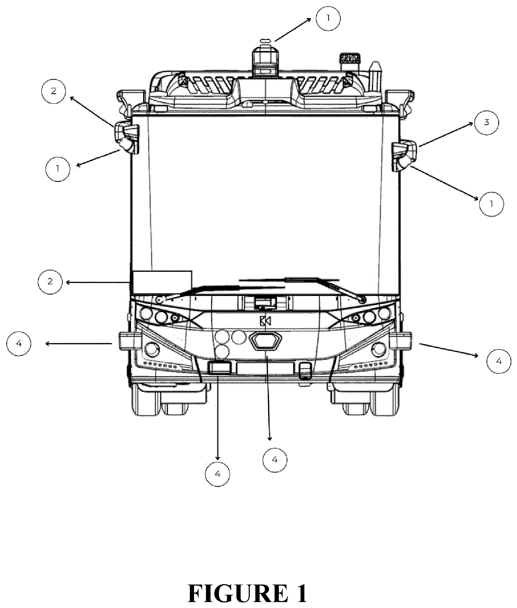

Figure 1-The application view of external human-machine interface (EHMI) and information sharing system for autonomous vehicles.

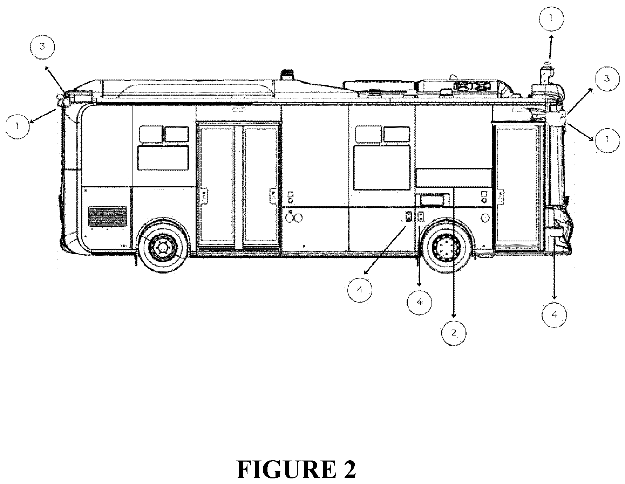

Figure 2-The application view of external human-machine interface (EHMI) and information sharing system for autonomous vehicles.

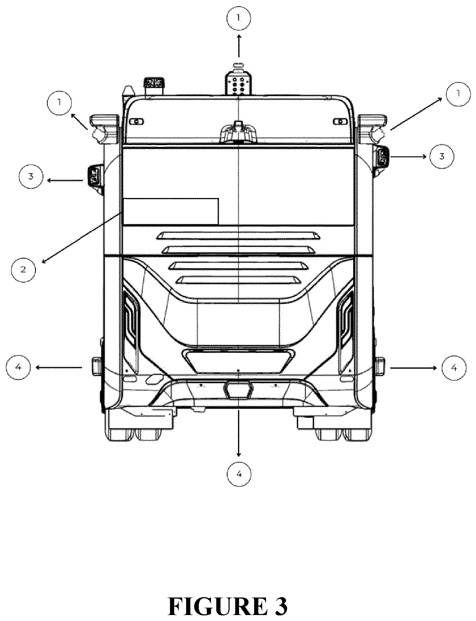

Figure 3-The application view of external human-machine interface (EHMI) and information sharing system for autonomous vehicles.

### Description of references in figures

1. Lidar sensor
2. Led Screen
3. Camera
4. Radar sensor

### Description of the invention

The inventive external human-machine interface (EHMI) and information sharing system for autonomous vehicles consists of lidar sensor (1) detecting objects in the environment in real time using laser beams and detects their movements, led display (2) sharing instant messages from the led display control system with pedestrians and other road users, camera (3) detecting traffic lights and classifies objects, and radar sensor (4) collecting distance and speed information of the bus with radio waves.

The invention will enable the autonomous bus to communicate its movement planning to its surroundings with the led displays (2); at the same time, it will share critical information about the environment according to the information received from the lidar sensor (1), camera (3) and radar sensor (4) already on the vehicle. Information about the autonomous bus's operating mode, environmental information and movement planning will be transferred to other traffic components, and an environment for safe driving will be prepared with the LED screens (2) in the front, rear and side of the vehicle.

Information from the vehicle's lidar sensor (1), camera (3), radar sensor (4) will be defined depending on the movement under sensor fusion, and information will be shared on the led screens (2) according to the objects being followed and the detected traffic components. A pedestrian passing in front of a bus will be detected and tracked by lidar sensor (1), camera (3), radar sensor (4) and other vehicles behind the bus will be warned via rear led display (2), while the pedestrian will be informed via front and side led displays (2). In the invention, no information will be written directly on the screens (2). Therefore, in this respect, it is possible to use the sensor information of the vehicle, to produce artificial intelligence-supported outputs and to share the obtained outputs as screen information through a different and unique approach from other studies. At the same time, the led displays (2) are to be controlled independently of each other, and information will be displayed only on the respective displays (2).

### Industrial application of the invention

With the external human-machine interface (HMI) and information sharing system for autonomous vehicles, information from the vehicle's sensors will be processed and instant traffic information will be transferred to other road users through the LED screens integrated on the autonomous buses.

## Claims

1. This invention relates to an external human-machine interface (EMI) and information sharing system for autonomous vehicles, which enables to increase traffic safety by transferring the operating mode, environmental information and movement planning of autonomous buses to other road users through LED panels, **characterized in that** it consists
- lidar sensor using laser beams to detect objects in the environment in real time and detect their movement (1),
- led screens allowing instant messages from the led display control system to be shared with pedestrians and other road users (2),
- a camera detecting traffic lights and categorizing objects (3),
- and a radar sensor (4) collecting distance and speed information of the bus via radio waves.
